# EUROPEAN PATENT APPLICATION

(11) **EP 3 935 953 A1**
(43) Date of publication of application: **12.01.2022**
(21) Application number: 19918370.8
(22) Date of filing: 02.12.2019
(51) Int. Cl.: A23F 5/24

(54) **COFFEE BEVERAGE PACKED IN CONTAINER**

(30) Priority: 07.03.2019 JP 2019041827
(71) Applicant: Suntory Holdings Limited, Osaka 530-8203 (JP)
(72) Inventor: MATSUBAYASHI, Hideki, Kawasaki-shi, Kanagawa 211-0067 (JP); NAKATA, Aki, Kawasaki-shi, Kanagawa 211-0067 (JP)
(74) Representative: Vossius & Partner Patentanwälte Rechtsanwälte mbB
(86) International application number: PCT/JP2019/047009
(87) International publication number: WO 2020/179159

(57) **Abstract**

An object of the present invention is to provide a packaged coffee beverage with reduced deterioration in flavor.

0.1 to 2.0 mg/100 mL of 1-deoxynojirimycin is incorporated in a coffee beverage with a coffee solids content of from 0.3 to 3.0% by mass.

## Description

### TECHNICAL FIELD

The present invention relates to a packaged coffee beverage comprising a specified amount of 1-deoxynojirimycin, and more particularly to a packaged coffee beverage with reduced deterioration in coffee flavor.

### BACKGROUND ART

The aroma and flavor of coffee are very delicate and unstable. The superior aroma and flavor of coffee immediately after extraction change with the lapse of time and cannot be maintained for a long time. In industrial production of coffee beverages, coffee beans are contacted with heated water for a long time, and harsh heat sterilization is required for long-term storage at ordinary temperatures; thus, the produced coffee beverages lose their characteristic superior aroma and significantly change in flavor. Therefore, packaged coffee beverages produced industrially are significantly different in aroma and flavor from regular coffee brewed at home or somewhere else. Accordingly, various techniques have been reported to reduce deterioration and loss of coffee flavor caused by heating -- for example, a technique of adding an emulsified coffee oil (PTL 1); a technique of using a liquid extract in which the ratio of pyrazine content and N-furfurylpyrrole content is adjusted to be within a specified range (PTL 2); and a technique of using a liquid extract prepared through treatment with activated carbon added during or after coffee extraction (PTL 3).

Meanwhile, 1-deoxynojirimycin is an iminosugar found in mulberry leaves or other plants, and is reported to be capable of suppressing the elevation of blood glucose levels. It is known that sugar-mimic alkanoids such as 1-deoxynojirimycin have a disadvantage in that when they are added to foods and beverages, they may deteriorate the flavor of the foods and beverages (PTL 4). However, there is no report regarding a coffee beverage that incorporates 1-deoxynojirimycin or a mulberry leaf extract.

### CITATION LIST

### PATENT LITERATURES

PTL 1: Japanese Unexamined Patent Application Publication No. JP 2001-086933
PTL 2: Japanese Unexamined Patent Application Publication No. JP 2011-125288
PTL 3: Japanese Unexamined Patent Application Publication No. JP H07-313063
PTL 4: Japanese Unexamined Patent Application Publication No. JP H09-140351

### SUMMARY OF INVENTION

### TECHNICAL PROBLEM

An object of the present invention is to provide a packaged coffee beverage with reduced deterioration in flavor caused by heat sterilization or the like.

### SOLUTION TO PROBLEM

The present inventors have made intensive studies to achieve the aforementioned object and, as a result, found that a specified amount of 1-deoxynojirimycin has a superior effect in reducing deterioration in the flavor of a coffee beverage. Thus, the inventors have completed the present invention. As referred to herein, the "flavor" refers to the intensity of characteristic aroma of coffee. This invention is directed, but not limited, to the following.
(1) A packaged coffee beverage having a coffee solids content of from 0.3 to 3.0% by weight, and a 1-deoxynojirimycin content of from 0.1 to 2.0 mg/100 mL.
(2) The packaged coffee beverage as set forth in (1), wherein the packaged coffee beverage is a black coffee.
(3) The packaged coffee beverage as set forth in (1) or (2), wherein the packaged coffee beverage is a heat sterilized beverage.

### ADVANTAGEOUS EFFECTS OF INVENTION

The present invention reduces deterioration in the flavor of a coffee beverage caused by heat sterilization or the like, and therefore, makes it possible to provide a packaged coffee beverage having rich aroma and high palatability, which is storable at ordinary temperatures for a long period of time.

### DESCRIPTION OF EMBODIMENTS

One embodiment of the present invention is directed to a packaged coffee beverage comprising coffee solids and 1-deoxynojirimycin, and having a coffee solids content of from 0.3 to 3.0% by weight, and a 1-deoxynojirimycin content of from 0.1 to 2.0 mg/100 mL.

### (Coffee beverage)

As referred to herein, the "coffee beverage" refers to a beverage produced using a coffee matter as an ingredient, unless otherwise specified herein. The product type and standard of the coffee beverage are not particularly limited, and examples of the coffee beverage include "coffee", "coffee drinks" and "coffee-containing soft drinks" as defined in the "Fair Competition Code for Labeling of Coffee Drinks" certified in 1977. Among beverages produced using a coffee matter as an ingredient, those with a milk solids content of not less than 3.0% by weight are covered by the application of the "Fair Competition Code for Labeling of Drinking Milk" and handled as "milk beverages". Such beverages are also included in the scope of the coffee beverage of this invention. Further, "coffee-containing soft drinks (low-caffeine)", which are produced using a coffee matter extracted or eluted from coffee beans from which at least 90% of caffeine is removed, are included in the scope of the coffee beverage of this invention.

As for concentrated coffee beverages which are to be diluted before drinking, those in a diluted form upon drinking are included in the scope of the coffee beverage of this invention.

As referred to herein, the "coffee matter" refers to a liquid containing components derived from coffee beans, and is exemplified by a liquid coffee extract -- *i*.*e*., a liquid extracted from roasted and ground coffee beans with water, warm water or the like. Other examples of the coffee matter include a coffee essence obtained by concentrating a liquid coffee extract, and a solution prepared by adding water, warm water or the like to an instant coffee made from a dried coffee extract so as to give an adequate volume.

The species of coffee trees that produce coffee beans used as an ingredient in the present invention is not particularly limited. Exemplary coffee tree species include, but are not limited to, *arabica*, *robusta* and *liberica.* Exemplary coffee varieties include, but are not particularly limited to, Mocha, Brazil, Columbia, Guatemala, Blue Mountain, Kona, Mandheling, and Kilimanjaro. The degree of roasting (which is basically expressed at three levels: "shallow roast", "medium roast", and "deep roast") is not particularly limited. Raw coffee beans may be used, or a blend of two or more varieties of coffee beans may be used. As for the method for roasting coffee beans, there is no particular limitation on roasting temperature or roasting environment, and a commonly used roasting method can be adopted. Further, the method for extracting roasted coffee beans is not limited at all. For example, roasted coffee beans are ground into coarse, medium or fine grinds, and ground coffee beans are extracted with water or hot water (at 0 to 200°C). Exemplary extraction methods include, but are not limited to, drip extraction, siphon extraction, boiling extraction, jet extraction, and continuous extraction.

The coffee matter content in the coffee beverage of the present invention is expressed as a "coffee solids" content. As referred to herein, the "coffee solids" refers to the weight of a solid dried product obtained after drying a coffee matter using a common drying method (e.g., freeze-drying, evaporation to dryness) to remove moisture. In other words, the coffee solids in a coffee beverage refer to a solid matter remaining after components not derived from coffee beans, such as milk, sweetening components, pH adjustor, and flavorings, are removed from soluble solids that can be found in a coffee beverage. In this invention, the coffee solids content in the liquid coffee extract corresponds to the Brix (%) of the liquid coffee extract. Brix can be measured using a sugar content meter (sugar refractometer).

The coffee solids content in the coffee beverage of the present invention is in the range of from 0.3 to 3.0% by weight. In recent years, many packaged coffee beverages with a relatively high coffee solids content have been distributed in the market with the aim of enjoying the inherent flavor of coffee. Such coffee beverages with a high coffee solids content tend to markedly deteriorate in flavor due to heat sterilization or the like. In particular, black coffee beverages only contain coffee solids and do not contain other components such as milk or sweetening components, and thus tend to be more markedly perceived to deteriorate in flavor. Therefore, the coffee solids content in the coffee beverage of this invention is not more than 3.0% by weight, preferably not more than 2.5% by weight, more preferably not more than 1.7% by weight, from the viewpoint of ensuring that the intended effects of this invention can be significantly exhibited. On the other hand, since the problem of deterioration in flavor does not become manifest in coffee beverages with a low coffee solids content, the coffee solids content in the coffee beverage of this invention is not less than 0.3% by weight, preferably not less than 0.5% by weight, more preferably not less than 0.7% by weight.

### (1-Deoxynojirimycin)

The present invention is characterized by reducing deterioration in the flavor of a coffee beverage by use of 1-deoxynojirimycin. As referred to above, 1-deoxynojirimycin, which is an iminosugar found in mulberry leaves or the like, is also called moranoline or 1,5-dideoxy-1,5-imino-D-glucitol, and is assigned CAS Registry No. 19130-96-2.

The coffee beverage of the present invention contains from 0.1 to 2.0 mg/100 mL of 1-deoxynojirimycin. When the coffee beverage of this invention has a 1-deoxynojirimycin content of not less than 0.1 mg/100 mL, deterioration in the flavor of the coffee beverage can be effectively reduced leading to improvement in the flavor of the coffee beverage. The coffee beverage of this invention has a 1-deoxynojirimycin content of preferably not less than 0.17 mg/100 mL, more preferably not less than 0.2 mg/100 mL.

It is known that sugar-mimic alkaloids such as 1-deoxynojirimycin have a disadvantage in that when they are added to foods and beverages, they may deteriorate the flavor of the foods and beverages (refer to paragraph [0003] of PTL 4). The present inventors found that coffee beverages containing high concentrations of 1-deoxynojirimycin are more likely to leave an unpleasant aftertaste in the latter half of drinking time. As referred to above, the "unpleasant aftertaste" refers to a coarse feeling on the tongue (hereinafter also referred to as "harsh aftertaste"). The harsh aftertaste of 1-deoxynojirimycin may impair the intended effect of the present invention, or namely the high palatability of a good-flavored coffee beverage felt upon drinking. From the viewpoint that the beverage gives an excellent clean sensation in the mouth and hardly leaves an unpleasant aftertaste, the upper limit of the 1-deoxynojirimycin content in the coffee beverage of this invention is 2.0 mg/100 mL. The coffee beverage of this invention has a 1-deoxynojirimycin content of preferably not more than 1.5 mg/100 mL, more preferably not more than 1.0 mg/100 mL. The 1-deoxynojirimycin content in the beverage can be measured by using, for example, high-performance liquid chromatography (HPLC).

The 1-deoxynojirimycin used in the present invention is not limited to those extracted or isolated from a mulberry plant or other plants. Substances produced by chemical synthesis or fermentation, or products produced by bacteria may also be used. Examples of commercially available products of 1-deoxynojirimycin include the product sold by Wako Pure Chemical Industries, Ltd.

In the present invention, 1-deoxynojirimycin can be used in the form of a plant extract from a mulberry plant or other plants. Examples of mulberry plants that can be used include *Morus bombycis* Koidzumi, *Morus alba* L., *Morus australis* Poir, *Morus latifolia* Poir., *Morus mongolica* Schneid, *Morus nigra* L., *Morus rubra* L., and *Morus boninensis* Koidzumi, and any hybrids or variants thereof can also be used. The site of the plant to be used is not limited in any way -- leaves, branches, sprouts, barks, trunks, roots, root barks, flowers, syncarps and the like can be used. Examples of mulberry plant extracts include, but are not limited to, the mulberry leaf extract powder, sterilized mulberry leaf powder and the like produced by Toyotama Healthy Food Co., Ltd.

In the case of using a plant extract, it is preferable to use a plant extract with increased concentration of 1-deoxynojirimycin, in order to ensure that the action and effect of the present invention can be effectively obtained and that the palatability of the coffee beverage is not impaired. The following presents an exemplary method for obtaining a mulberry leaf extract containing 1-deoxynojirimycin. First, an alcohol such as hydrous ethanol is added to a dry product of mulberry leaves to obtain an extract. Since 1-deoxynojirimycin is present only at low concentrations (about 0.1-0.2% by weight) in dry mulberry leaves, extraction with an alcohol is preferred to achieve efficient extraction. The obtained liquid extract is treated in a centrifuge to remove insolubles, and is then vacuum concentrated to obtain a mulberry leaf extract. The thus-obtained mulberry leaf extract generally contains 1-deoxynojirimycin at a concentration of from 0.4 to 1% by weight.

The 1-deoxynojirimycin content in the coffee beverage can be quantified using HPLC (high-performance liquid chromatography) performed under, for example, the conditions detailed below. Beverage samples may be vacuum concentrated, if necessary, before analysis.

### (HPLC analysis conditions)

- Column: TSKgel Amide-80, ϕ4.6 mm × 250 mm, particle size 5 µm
- Mobile phase: Mixed solution of water, acetonitrile and acetic acid
- Flow rate: 1.0 mL/min.
- Column temperature: 40°C
- Ionization method: Electrospray ionization (positive ion detection mode)
- Mass-to-change ratio (m/z): 164.0 → 109.9

### (Other components)

In addition to the components described above, the coffee beverage of the present invention may have other components added thereto, as appropriate, such as sweeteners (*e*.*g*., sucrose, isomerized sugar, glucose, fructose, lactose, maltose, xylose, isomerized lactose, fructo-oligosaccharide, malto-oligosaccharide, isomalto-oligosaccharide, galacto-oligosaccharide, coupling sugar, palatinose, maltitol, sorbitol, erythritol, xylitol, lactitol, Palatinate, saccharified reduced starch, stevia, glycyrrhizin, thaumatin, monellin, aspartame, alitame, saccharin, acesulfame K, sucralose, and dulcin), antioxidants (*e*.*g*., vitamin C, sodium erythorbate), emulsifiers (*e*.*g*., sucrose fatty acid esters, sorbitan fatty acid esters, polyglycerol fatty acid esters), sodium caseinate, and flavorings (*e*.*g*., coffee flavoring, milk flavoring), to the extent that such other components do not impair the effects of this invention.

In black coffee beverages containing no milk, deterioration in flavor is more likely to become manifest. Such deterioration in the flavor of black coffee beverages can be effectively reduced by the present invention. From this viewpoint, the coffee beverage of this invention is preferably a black coffee containing no milk. The pH of the packaged coffee beverage of this invention is preferably in the range of from pH 4.5 to 7.0, more preferably from pH 5.0 to 6.5, still more preferably from pH 5.5 to 6.0, from the viewpoints of aroma and storage stability.

### (Packaged beverage)

The package used to make the packaged beverage of the present invention is not particularly limited, and can be any of commonly used packages. Preferred examples of resin packages include polyethylene terephthalate-based molded packages (so-called PET bottle). Other packages besides resin packages include metal can, paper packages combined with metallic foils or plastic films, and glass bottle. The coffee beverage of this invention can be provided in a form packed and sealed in such a package. The volume of the coffee beverage of this invention is not particularly limited, and is for example in the range of from 150 mL to 1000 mL, preferably from 190 mL to 800 mL.

As mentioned above, the present invention is characterized by effectively reducing deterioration in the flavor of a packaged coffee beverage. The heat sterilization conditions adopted in this invention can be, for example, those conditions having similar effects to those of the conditions stipulated in the Food Sanitation Act of Japan, and can be specifically set to the following conditions: at 60 to 150°C, preferably at 90 to 150°C, more preferably at 110 to 150°C, for 1 second to 60 minutes, preferably for 1 second to 30 minutes. When the beverage of this invention is produced using a heat-resistant package (e.g., metal can, glass bottle), the beverage can be subjected to retort sterilization (at 110 to 140°C for 1 minute to several tens of minutes). When the beverage is produced using a non-heat-resistant package (*e*.*g*., PET bottle, paper package), a prepared liquid, for example, can be first sterilized at high temperatures for a short period of time using a plate-type heat exchanger or the like (UHT sterilization at 110 to 150°C for 1 second to several tens of seconds), and then cooled to a specified temperature and packed in the package.

### EXAMPLES

Hereunder, the present invention will be specifically described in detail by reference to experimental examples, but this invention is not limited to these examples. Unless otherwise stated herein, all numerical ranges are inclusive of their endpoints.

### Experiment 1: Preparation and evaluation of coffee beverages (Reference examples)

Different coffee beverages were prepared by adding water to a concentrated coffee essence (Brix 47%) so as to give such coffee solids contents as shown in Table 1. The prepared coffee beverages were packed in can packages and heat sterilized (at 120 to 125°C for 5 to 15 minutes) to produce packaged coffee beverages (sample Nos. 1-1 to 1-5).

The produced packaged coffee beverages were evaluated regarding deterioration in flavor after sterilization by three panelists in the three-point scale from 1 to 3 points. To be specific, with unsterilized beverage samples having the same coffee solids contents being used as controls, the ratings given by each panelist based on the criteria detailed below were discussed again in a free-form manner among all the panelists, and the final ratings were assigned as integer values in consensus among them. Before the sensory evaluation, the panelists had confirmed the relationship between different intensities of characteristic superior aroma (flavor) of coffee and their corresponding ratings using reference standard samples including the unsterilized samples so as to ensure that their ratings were standardized as much as possible.
- 3 points: The beverage is felt to significantly deteriorate in flavor.
- 2 points: The beverage is felt to deteriorate in flavor and to be problematic.
- 1 point: The beverage is felt to have little deterioration in flavor.

The results of the sensory evaluation are shown in Table 1. It was confirmed that the packaged coffee beverages having a coffee solids content of not less than 0.3% by mass deteriorated in flavor after heat sterilization.

**[Table 1]**

| Beverage sample | 1-1 | 1-2 | 1-3 | 1-4 | 1-5 |
|---|---|---|---|---|---|
| Coffee solids content (% by mass) | 0.1 | 0.3 | 1.0 | 1.5 | 3.0 |
| Sensory rating | 1 | 2 | 3 | 3 | 3 |

### Experiment 2: Preparation and evaluation of coffee beverages (1)

The coffee beverages with different coffee solids contents as obtained in Experiment 1 were each mixed with 1-deoxynojirimycin and then heat sterilized by the same procedure as in Experiment 1 to thereby prepare packaged coffee beverages. The 1-deoxynojirimycin used was a synthetic product (produced by FUJIFILM Wako Pure Chemical Corporation; purity 98%). 1-Deoxynojirimycin was added to the coffee beverages so as to ensure that the beverages had such 1-deoxynojirimycin contents as shown in the table given below.

The prepared packaged coffee beverages were evaluated by three panelists in the five-point scale from 1 to 5 points. As controls for comparison with the working examples, comparative examples having the same coffee solids contents but containing no 1-deoxynojirimycin were also evaluated in order to determine to what extent deterioration in flavor caused by sterilization was improved by addition of 1-deoxynojirimycin. The ratings given by each panelist based on the criteria detailed below were discussed again in a free-form manner among all the panelists, and the final ratings were assigned as integer values in consensus among them. Before the sensory evaluation, the panelists had confirmed the relationship between different intensities of characteristic superior aroma (flavor) of coffee and their corresponding ratings using reference standard samples including the unsterilized samples so as to ensure that their ratings were standardized as much as possible.
- 5 points: Deterioration in flavor is significantly improved
- 4 points: Deterioration in flavor is improved
- 3 points: Deterioration in flavor is somewhat improved
- 2 points: Little deterioration in flavor is improved
- 1 point: No deterioration in flavor is improved at all

The results of the sensory evaluation are shown in Table 2. Deterioration in the flavor of packaged coffee beverages was reduced successfully by adding 1-deoxynojirimycin to the coffee beverages. When the coffee solids content of coffee beverages exceeded 4.0% by mass, the beverages became too intense in coffee flavor so that the effects of the present invention were hardly perceived.

**[Table 2]**

| Beverage sample | 2-1 (Com. Ex.) | 2-2 | 2-3 (Com. Ex.) | 2-4 | 2-5 (Com. Ex.) | 2-6 | 2-7 | 2-8 | |
|---|---|---|---|---|---|---|---|---|---|
| Coffee solids content (% by mass) | 0.3 | | 0.5 | | 1.5 | | | | |
| 1-Deoxynojirimycin content (mg/100mL) | 0 | 0.5 | 0 | 0.5 | 0 | 0.2 | 0.5 | 1.1 | |
| Sensory rating | 1 | 5 | 1 | 5 | 1 | 5 | 5 | 5 | |
| | | | | | | | | | |
| Beverage sample | 2-9 (Com. Ex.) | 2-10 | 2-11 | 2-12 (Com. Ex.) | 2-13 | 2-14 | 2-15 | 2-16 (Com. Ex.) | 2-17 |
| Coffee solids content (% by mass) | 2.0 | | | 3.0 | | | | 4.0 | |
| 1-Deoxynojirimycin content (mg/100mL) | 0 | 0.5 | 1.1 | 0 | 0.1 | 0.5 | 1.1 | 0 | 0.5 |
| Sensory rating | 1 | 5 | 5 | 1 | 4 | 4 | 5 | 1 | 2 |

### Experiment 3: Preparation and evaluation of coffee beverages (2)

The coffee beverage with a coffee solids content of 1.0% by mass as obtained in Experiment 1 was mixed with different amounts of 1-deoxynojirimycin and then heat sterilized by the same procedure as in Experiment 1 to thereby prepare different packaged coffee beverages. The 1-deoxynojirimycin used was a synthetic product (produced by FUJIFILM Wako Pure Chemical Corporation; purity 98%). 1-Deoxynojirimycin was added to the coffee beverage so as to obtain beverages having such 1-deoxynojirimycin contents as shown in the table given below.

The sensory evaluation was performed by the same procedure as in Experiment 2 in order to determine to what extent deterioration in flavor caused by sterilization was improved by addition of 1-deoxynojirimycin. The results of the sensory evaluation are shown in Table 3. As evident from the table, deterioration in the flavor of coffee beverages after heat sterilization was reduced successfully by adding 1-deoxynojirimycin to the beverages in an amount of not less than 0.1 mg per 100 mL of the coffee beverage. In particular, those coffee beverages prepared with addition of 1-deoxynojirimycin in an amount of not less than 0.2 mg/100 mL were particularly superior in flavor.

On the other hand, in sample No. 3-9, which had a 1-deoxynojirimycin content of 3.0 mg/100 mL, reduced deterioration in flavor was observed, but the coarse, harsh aftertaste of 1-deoxynojirimycin lingering on the tongue was felt to some degree.

**[Table 3]**

| Beverage sample | 3-1 (Com. Ex.) | 3-2 | 3-3 | 3-4 | 3-5 | 3-6 | 3-7 | 3-8 | 3-9 |
|---|---|---|---|---|---|---|---|---|---|
| Coffee solids content (% by mass) | 1.0 | | | | | | | | |
| 1-Deoxynojirimycin content (mg/100mL) | 0 | 0.1 | 0.2 | 0.3 | 0.5 | 0.7 | 1.1 | 2.0 | 3.0 |
| Sensory rating | 1 | 4 | 5 | 5 | 5 | 5 | 5 | 5 | 5 |

### Experiment 4: Preparation and evaluation of coffee beverages (3)

A coffee beverage with a coffee solids content of 0.5% by mass was prepared by the same procedure as in Experiment 1. To the coffee beverage, 0.5 mg/100 mL of 1-deoxynojirimycin and 120 mg/100 mL of sodium hydrogen carbonate as a pH adjustor were added to thereby prepare a pH-adjusted coffee beverage. The prepared beverage was packed in a package and then heat sterilized (at 120 to 125°C for 5 to 15 minutes) to thereby produce a heat sterilized, packaged coffee beverage. The packaged beverage had a pH of 5.8.

The sensory evaluation was performed by the same procedure as in Experiment 2 in order to determine to what extent deterioration in flavor caused by sterilization was improved by addition of 1-deoxynojirimycin. The results of the sensory evaluation are shown in Table 4. As evident from the table, it was found that according to the present invention, a packaged coffee beverage having superior flavor was obtained even when 1-deoxynojirimycin was added to a packaged coffee beverage prepared with addition of sodium hydrogen carbonate.

**[Table 4]**

| Beverage sample | 4-1 (Com. Ex.) | 4-2 | 4-3 |
|---|---|---|---|
| Coffee solids content (% by mass) | 0.5 | | |
| 1-Deoxynojirimycin content (mg/100mL) | 0 | 0.5 | 0.5 |
| Sodium hydrogen carbonate content (mg/100mL) | 0 | 0 | 120 |
| Sensory rating | 1 | 5 | 5 |

## Claims

1. A heat sterilized, packaged coffee beverage having a coffee solids content of from 0.3 to 3.0% by weight, and a 1-deoxynojirimycin content of from 0.1 to 2.0 mg/100 mL.

2. The heat sterilized, packaged coffee beverage according to claim 1, wherein the heat sterilized, packaged coffee beverage is a black coffee.

3. A method for producing a heat sterilized, packaged coffee beverage, the method comprising a heat sterilization step,
wherein the heat sterilized, packaged coffee beverage has a coffee solids content of from 0.3 to 3.0% by weight, and a 1-deoxynojirimycin content of from 0.1 to 2.0 mg/100 mL.
